# FASCICULE DE BREVET EUROPEEN

(11) **EP 1 390 241 B1**
(45) Date de publication et mention de la délivrance du brevet: **23.03.2005**
(21) Numéro de dépôt: 02732840.0
(22) Date de dépôt: 25.04.2002
(51) Int. Cl.: B60S 1/04

(54) **MODULE D'EQUIPEMENT DE VEHICULE AUTOMOBILE**
BEFESTIGUNG EINES ZUBEHÖRTEILS AUF EIN KRAFTFAHRZEUG
MOTOR VEHICLE EQUIPMENT MODULE

(30) Priorité: 23.05.2001 FR 0107288
(43) Date de publication de la demande: 25.02.2004
(73) Titulaire: VALEO SYSTEMES D'ESSUYAGE, 78321 La Verrière (FR)
(72) Inventeur: IZABEL, Vincent, F-91800 Brunoy (FR)
(86) Numéro de dépôt international: PCT/FR2002/001448
(87) Numéro de publication internationale: WO 2002/094623

(56) Documents cités:
- EP-A- 0 950 586
- DE-A- 3 116 821
- FR-A- 2 796 915
- US-A- 5 441 227
- US-A- 5 799 930

## Description

L'invention propose un module d'équipement de véhicule automobile.

L'invention propose plus particulièrement un module d'équipement de véhicule automobile du type qui comporte au moins un premier et un deuxième composants qui sont destinés à être fixés sur un élément de structure du véhicule par un élément de fixation, tel qu'une vis.

Les véhicules automobiles comportent généralement un ouvrant arrière dans lequel est réalisé un évidement qui est obturé par un panneau vitré. Dans certains cas, les véhicules comportent un dispositif d'essuyage du panneau vitré.

Le dispositif d'essuyage comporte un arbre d'entraînement d'un balai d'essuyage qui est entraîné en rotation par un moteur électrique et qui est guidé en rotation par un palier qui traverse axialement vers l'extérieur la paroi de l'ouvrant arrière.

Lorsque le panneau vitré est monté pivotant par rapport à l'ouvrant entre une position ouverte et une position fermée, le véhicule comporte une serrure de verrouillage de la position du panneau vitré par rapport à la partie fixe de l'ouvrant.

La serrure de verrouillage est constituée d'un mécanisme comprenant un pêne qui est fixé sur la partie fixe de l'ouvrant et d'une gâche qui est fixée sur le panneau vitré de façon que, lorsque ce dernier est en position fermée, le pêne coopère avec la gâche de façon à l'immobiliser. Cela permet de verrouiller la position du panneau vitré.

Ainsi, l'ouvrant est équipé d'un module constitué d'un dispositif d'essuyage et une serrure de verrouillage.

Le module d'équipement peut aussi comporter un feu d'éclairage, notamment un feu de stop, dont un élément de support peut être plaqué contre la face arrière interne du panneau vitré.

Le document FR-A-2796915 montre un module d'équipement de véhicule automobile telle que décrit dans la première partie de la revendication une.

Lorsque le moteur d'entraînement est en fonctionnement, il provoque des vibrations qui sont transmises à l'élément de structure du véhicule.

Les vibrations peuvent provoquer un vieillissement accéléré des éléments qui sont situés à proximité, tel que le système d'éclairage du feu de stop. Elles peuvent aussi provoquer le desserrage des éléments de fixation et d'immobilisation du dispositif d'essuyage sur l'ouvrant du véhicule, ce qui occasionne l'apparition de jeu.

De façon similaire, le fonctionnement du véhicule provoque des vibrations qui sont transmises au moteur d'entraînement. Cela peut notamment provoquer un vieillissement accéléré du moteur ainsi que le desserrage des éléments de fixation et d'immobilisation du dispositif d'essuyage sur l'ouvrant du véhicule.

De plus, elles produisent du bruit que ce qui est préjudiciable au confort des occupants du véhicule et nuit à l'image de qualité du véhicule.

De façon à résoudre ces problèmes, il est connu d'interposer des éléments amortisseurs au niveau des zones de fixation du moteur d'entraînement de façon à les découpler de l'élément de structure du véhicule et ainsi d'amortir et de filtrer ces vibrations.

Dans le but de simplifier la fixation du module lorsqu'il est constitué d'un dispositif d'essuyage et d'un feu de stop, il est connu que les deux composants soient fixés entre eux en vue de leur livraison et de leur fixation sur l'élément de structure.

Cependant, lorsque l'ouvrant est claqué de façon à le fermer, le moteur est soumis à un léger déplacement de l'ordre de quelques millimètres qui est dû à son inertie, et à l'élasticité des éléments amortisseurs. Le moteur entraîne alors le feu de stop dont l'élément de support est décollé de la face arrière du panneau vitré puis, lors de retour élastique du module, est à nouveau mis en contact avec le panneau vitré.

Le retour élastique du module provoque alors un choc de l'élément de support du feu de stop sur le panneau vitré ce qui accélère le vieillissement du système d'éclairage et produit un bruit.

Lorsque le module est constitué du dispositif d'essuyage sur lequel est fixée la serrure son déplacement dû à la fermeture du panneau vitré, peut provoquer un décalage du pêne, tel qu'il ne puisse plus coopérer avec la gâche.

De plus, de manière générale le contour de l'évidemment de l'ouvrant comporte un joint qui permet d'assurer l'étanchéité de l'intérieur du véhicule lorsque le panneau vitré est fermé.

Lors de la fermeture du panneau vitré le joint est comprimé, son retour élastique est limité par la serrure. Cependant, la force élastique exercée par le joint provoque la compression des éléments amortisseurs. L'application continue et prolongée de cet effort provoque le fluage des éléments amortisseurs et par conséquent la perte de leur efficacité.

De façon à remédier ces inconvénients, l'invention propose un module d'équipement de véhicule automobile du type qui comporte au moins un premier et un deuxième composants dont une première et une deuxième zones de fixation, qui consistent notamment en des plaques dans lesquelles sont réalisées des orifices, sont destinées à être fixées sur un élément de structure du véhicule par l'intermédiaire d'un élément commun de fixation, et du type dont un élément élastique est interposé entre la deuxième zone de fixation et l'élément de structure,
caractérisé en ce qu'il comporte des moyens de liaison qui relient la première et la deuxième zones de fixation, de façon à relier entre eux les deux composants lors de la livraison du module en vue de son montage sur l'élément de structure du véhicule, en ce que l'élément élastique est intercalé axialement entre les moyens de liaison et la deuxième zone de fixation du deuxième composant, et en ce que les moyens de liaison sont interposés entre l'élément commun de fixation, et l'élément de structure, lors de la fixation du module de façon que le premier composant soit immobilisé par rapport à l'élément de structure et que le deuxième composant soit découplé mécaniquement par rapport au premier composant, notamment en vue de filtrer les vibrations.

Selon d'autres caractéristiques de l'invention :
- les moyens de liaison comportent une entretoise dans laquelle sont formées au moins partiellement une première gorge radiale externe qui immobilise axialement la première zone de fixation du premier composant et une deuxième gorge radiale qui reçoit l'élément élastique de découplage ;
- l'entretoise comporte un tube étagé qui est traversé axialement par l'élément commun de fixation lors de la fixation du module, la première gorge est réalisée par le sertissage de l'extrémité libre du tronçon de plus petit diamètre du tube sur la première zone de fixation, et la deuxième gorge est réalisée par la première zone de fixation plane du premier composant qui s'étend radialement depuis la première gorge, et par une collerette du tube qui s'étend radialement vers l'extérieur du tube depuis l'extrémité libre du tronçon de plus grand diamètre ;
- l'entretoise comporte un tube sur le diamètre extérieur duquel est réalisée une nervure d'orientation radiale destinée à former une butée axiale vers l'arrière pour l'élément élastique et une butée axiale vers l'avant pour la première zone de fixation du premier composant, et les extrémités libres sont formées radialement de façon former la première et la deuxième gorge pour relier entre eux les deux composants ;
- l'entretoise comporte au moins deux éléments formant chacun au moins partiellement la première et la deuxième gorges radiales ;
- l'entretoise comporte un premier et un deuxième éléments qui présentent chacun à leurs extrémités libres axiales opposées une collerette radiale qui forment chacune une butée axiale de la première zone de fixation et de l'élément élastique dans des sens opposés respectivement, et un troisième élément, interposé axialement entre les deux premiers éléments, présente une nervure radiale qui forme butée axiale commune de l'élément élastique et de la première zone de fixation ;
- les parois cylindriques externes des deux premiers éléments comportent des formes radiales en saillies ou en creux qui coopèrent avec des formes en creux ou en saillies respectivement de la paroi cylindrique interne du troisième élément pour maintenir entre eux les éléments de l'entretoise lors de la livraison du module ;
- l'un au moins des composants est une serrure de verrouillage de la position d'un panneau vitré du véhicule ;
- l'un au moins des composants est un dispositif d'essuyage d'un panneau vitré du véhicule ;
- l'un au moins des composants est un feu de signalisation, tel qu'un feu de stop.

D'autres caractéristiques et avantages de l'invention apparaîtront à la lecture de la description détaillée qui suit pour la compréhension de laquelle on se reportera aux dessins annexés parmi lesquels :
- la figure 1 est une vue en perspective éclatée d'un ouvrant arrière du véhicule automobile équipé d'un module d'équipement réalisé conformément aux enseignements de l'invention ;
- la figure 2 est une vue en perspective partielle éclatée à grande échelle des composants d'un module d'équipement réalisé selon un premier mode de réalisation conformément aux enseignements de l'invention, avant leur assemblage ;
- la figure 3 est une vue similaire à celle représentée à la figure précédente, les composants du module réalisé conformément aux enseignements de l'invention étant assemblés ;
- la figure 4 est une vue similaire à celle représentée à la figure précédente, le module réalisé conformément aux enseignements de l'invention étant fixé sur l'ouvrant ;
- la figure 5 est une vue en perspective partielle éclatée à grande échelle des composants d'un module d'équipement réalisé selon une variante du premier mode de réalisation de l'invention, avant leur assemblage ;
- la figure 6 est une vue similaire à celle représentée à la figure précédente, le module assemblé étant fixé sur l'ouvrant ;
- la figure 7 est une vue en perspective partielle éclatée à grande échelle des composants d'un module d'équipement réalisé selon un deuxième mode de réalisation conformément aux enseignements de l'invention, avant leur assemblage ;
- la figure 8 est une vue similaire à celle représentée à la figure précédente, les composants du module réalisé conformément aux enseignements de l'invention étant assemblés ;
- la figure 9 est une vue similaire à celle représentée à la figure précédente le module assemblé étant fixé sur l'ouvrant.

Dans la suite de la description, le module d'équipement du véhicule comporte à titre d'exemple non limitatif, une serrure et un dispositif d'essuyage.

D'autres composants tels qu'un feu de stop, un dispositif de vision arrière et/ou un feu d'éclairage de la plaque d'immatriculation, peuvent être intégrés au module sans sortir du cadre de l'invention.

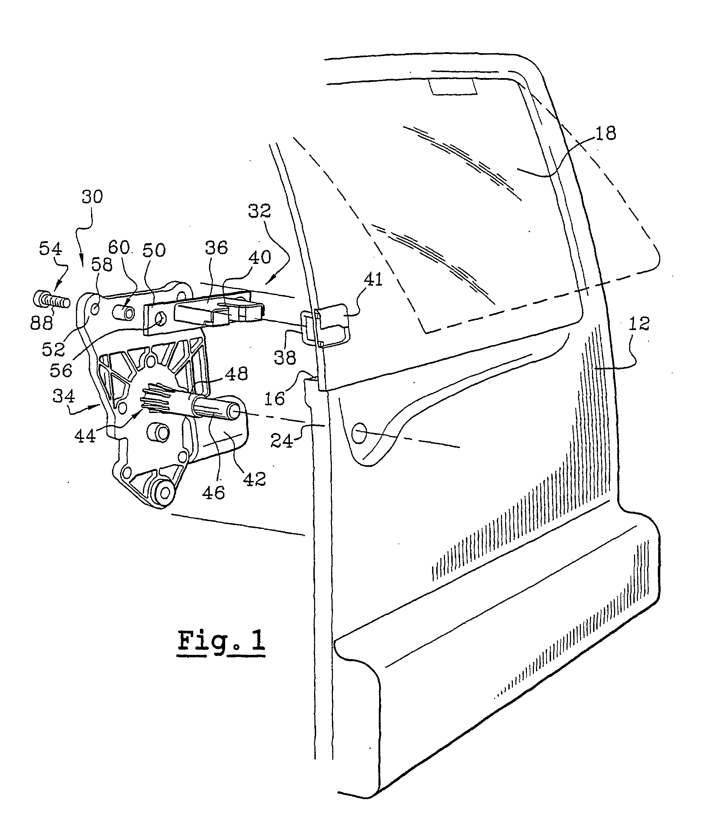

De façon à faciliter la compréhension de la description une orientation avant, arrière, et supérieure, inférieure sera utilisée, à titre non limitatif, conformément à l'orientation de gauche à droite et de haut en bas de la figure 1.

La figure 1 représente partiellement de façon schématique un élément de structure qui est ici un ouvrant arrière ou hayon 12 qui peut être monté articulé par rapport à la structure d'un véhicule selon un axe d'orientation sensiblement horizontale.

L'ouvrant arrière 12 comporte dans sa partie supérieure une ouverture 16 qui est obturée par une partie mobile qui est ici un panneau vitré 18.

Le panneau vitré 18 peut être constitué d'un cadre de renfort et de fixation qui reçoit une vitre. Le cadre de renfort et de fixation permet de relier la vitre à l'ouvrant 12 du véhicule par l'intermédiaire de moyens de liaison, non représentés.

Le panneau vitré 18 peut aussi être simplement constitué d'une vitre qui est reliée directement à l'ouvrant 12 du véhicule par l'intermédiaire des moyens de liaison.

Le panneau vitré 18 est monté mobile entre une position fermée représentée en trait fort et une position ouverte représentée en trait interrompu à la figure 1.

L'ouvrant arrière 12 est équipé dans une zone inférieure 24 d'un module d'équipement 30 qui comporte deux composants qui sont ici par exemple, une serrure 32 et un dispositif d'essuyage 34 de la vitre du panneau vitré 18.

La serrure 32 est constituée d'un mécanisme comprenant un pêne qui est agencé dans un boîtier 36 monté sur la zone inférieure 24 de l'ouvrant arrière 12 et d'une gâche 38 qui est montée sur la face interne du panneau vitré 18.

Lorsque le panneau vitré 18 est en position fermée, la gâche 38 est reçue dans une fente verticale complémentaire 40 du boîtier 36 qui débouche vers l'arrière, et elle coopère avec le pêne, propre à assurer le verrouillage de la gâche 38 dans le fond avant de la fente 40 de façon à empêcher son mouvement vers l'avant et à verrouiller la position le panneau vitré 18 en position fermée.

Le pêne est un élément mobile entre une position de verrouillage qui permet de bloquer la gâche 38 dans le fond arrière de la fente 40, et une position d'ouverture dans laquelle la gâche 38 peut sortir librement de la fente 40 vers l'arrière de façon à permettre le pivotement du panneau vitré 18 vers sa position ouverte.

De façon à compenser d'éventuelles dispersions des positions de la gâche et du pêne, la gâche 30 est fixée sur le panneau vitré 18 par des moyens réglables (non représentés), c'est-à-dire par exemple par des goujons dont le diamètre est inférieur aux orifices de fixation de la gâche 38 qu'ils traversent. Ainsi, lors de la fixation du module d'équipement 30 sur l'ouvrant 12, la position de la gâche 38 est déterminée en fonction de celle du pêne.

Le pêne peut être rappelé dans la position de verrouillage par des moyens élastiques tel qu'un ressort, la libération de la gâche 38 étant alors obtenue par l'actionnement d'une poignée d'ouverture qui commande le passage du pêne en position d'ouverture.

Ainsi, lorsque l'utilisateur désire manoeuvrer le panneau vitré 18 vers sa position ouverte, il actionne la poignée d'ouverture et exerce concomitamment un effort vers l'arrière sur le panneau vitré 18.

Conformément à la représentation de la figure 1, le pêne peut être motorisé, notamment par un moteur électrique. Ainsi, le verrouillage ou la libération de la gâche 38 est obtenue par la commande d'un circuit électrique. L'ouverture du panneau résulte alors d'un effort vers l'arrière exercé sur la poignée 41.

Le dispositif d'essuyage 32 est principalement constitué d'un moteur d'entraînement 42 et d'un palier arrière 44 fixés sur l'ouvrant arrière 12. Le palier arrière 44 reçoit axialement à rotation un arbre 46 d'entraînement d'un bras d'essuie-glace non représenté.

Le palier arrière 44 comporte un fût axial 48 qui traverse l'ouvrant arrière 12.

De façon à permettre la fixation sur l'ouvrant arrière 12, le boîtier 36 de la serrure 32 et le dispositif d'essuyage 34 comportent des premières et deuxièmes zones de fixation 50 et 52 respectivement qui consistent avantageusement en des zones planes d'orientation transversale du boîtier 36 de la serrure 32 et du dispositif d'essuyage 34 dans chacune desquelles est réalisé un orifice de fixation 56, 58 respectivement.

Un module d'équipement de ce type peut comporter des éléments communs de fixation 54 qui traversent les orifices des premières et des deuxièmes zones de fixation 50 et 52 de la serrure et du dispositif d'essuyage 34.

Ici le module d'équipement 30 comporte deux éléments communs de fixation 54.

Cela permet de supprimer deux éléments de fixation. En effet, la serrure 32 comporte deux zones de fixations 50 et le dispositif d'essuyage 34 en comporte trois. La fixation du module d'équipement 30 ne nécessite que trois éléments de fixation au lieu de cinq.

Dans la suite de description, il ne sera décrit l'assemblage que d'une première et d'une deuxième zones de fixation 50 et 52 du module d'équipement 30.

Conformément à l'invention, de façon à faciliter le montage du module 30 sur l'ouvrant 12, la serrure 32 et le dispositif d'essuyage 34 sont reliés entre eux par des moyens de liaison 60 lors de la livraison du module en vue de son montage sur l'ouvrant 12. Ainsi, les deux composants 32 et 34 sont reliés et prépositionnés l'un par rapport à l'autre, ce qui facilite notamment leur stockage ainsi que les manipulations de l'opérateur.

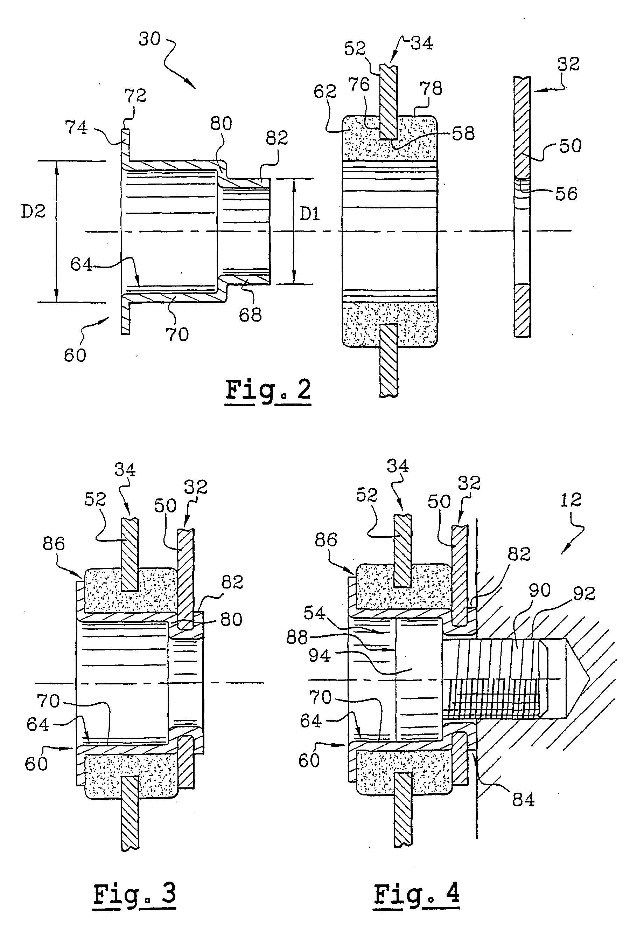

Conformément aux figures 2 à 9, un élément élastique 62 est intercalé axialement entre les moyens de liaison 60 et la deuxième zone de fixation 52 du dispositif d'essuyage 34.

De plus, les moyens de liaison 60 sont interposés entre l'élément commun de fixation 54 et l'ouvrant arrière 12, lors de la fixation du module 30 sur l'ouvrant 12, de façon que le boîtier 36 portant le pêne de la serrure 32 soit immobilisé par rapport à l'ouvrant 12 et que le dispositif d'essuyage 34 soit découplé mécaniquement par rapport à l'ouvrant arrière 12.

Ainsi, lorsque le panneau vitré 18 est claqué en vue de sa fermeture, la gâche 38 s'engage dans la fente 40 du boîtier 36 et coopère avec le pêne.

L'élément élastique 62 qui forme un amortisseur permet de découpler mécaniquement le dispositif d'essuyage 34 par rapport à la serrure 32. L'élément élastique 62 permet un mouvement relatif du dispositif d'essuyage 34 par rapport à la serrure 32. Ainsi, les vibrations qui sont provoquées notamment par le dispositif d'essuyage 34 lors de son fonctionnement et lors du claquement du panneau vitré 18 sur l'évidement 16 de l'ouvrant 12 ne sont pas transmises aux moyens de liaison 60. Elles sont amorties par l'élément élastique 62.

Ainsi, l'élément élastique 62 permet de protéger l'environnement du dispositif d'essuyage 34 contre ses vibrations, ce qui augmente la durée de vie du module et limite la production de bruits.

Dans la suite de la description, deux modes de réalisation du module d'équipement 30 vont être proposés à titre d'exemples non limitatif.

Les figures 2 à 4 représentent un premier mode de réalisation des composants du module d'équipement 30.

Les moyens de liaison 60 comportent une entretoise 64 constitué d'un tube étagé qui est par exemple réalisé en métal.

Le tube étagé présente un premier tronçon arrière 68 de diamètre D1 et un deuxième tronçon avant 70 de diamètre D2 supérieur à D1.

L'extrémité libre avant 72 du deuxième tronçon avant 70 est pliée radialement vers l'extérieur de façon à former une collerette 74.

L'élément élastique 62 est ici de forme tubulaire dont le diamètre intérieur correspond sensiblement au diamètre D2 du deuxième tronçon avant 70 et dont la longueur correspond à la longueur du deuxième tronçon avant 70.

Une rainure 76, qui est réalisée sensiblement dans un plan transversal médian de l'élément élastique 62, s'étend radialement depuis la paroi tubulaire extérieure 78 vers l'intérieur et permet de recevoir l'orifice 58 de la deuxième zone de fixation 52 du dispositif d'essuyage 34.

Ainsi, l'assemblage préliminaire du module 30 en vue de sa livraison consiste à enfiler l'élément élastique 62 sur le deuxième tronçon avant 70 jusqu'à ce qu'il vienne en butée axiale contre la collerette 74.

Ensuite, le premier tronçon arrière 68 est introduit dans l'orifice 56 de la première zone de fixation 50, de façon que la première zone de fixation 50 vienne en butée axiale contre l'épaulement annulaire 80 qui s'étend radialement entre le premier tronçon arrière 68 et du deuxième tronçon avant 70. Dans cette position, la première zone de fixation 50 forme une butée axiale vers l'arrière de l'élément élastique 62, et par conséquent de la deuxième zone de fixation 52 du dispositif d'essuyage 34.

L'assemblage du module d'équipement 30 est terminé, conformément à la figure 3, par le sertissage de l'extrémité libre 82 du premier tronçon avant 68 sur la première zone de fixation 50.

Le sertissage de l'extrémité libre 82 permet de réaliser une première gorge 84 qui reçoit et immobilise axialement la première zone de fixation 50 de la serrure 32 par rapport aux moyens de liaison 60.

La deuxième zone de fixation 52 du dispositif d'essuyage 34 est maintenue par rapport aux moyens de liaison 60 par les éléments élastique 62 de découplage qui est reçu dans une deuxième gorge radiale 86 réalisée entre la collerette 74 et la première zone de fixation 50.

Ainsi, les moyens de liaison 60 permettent de relier la première et la deuxième zones de fixation 50 et 52 de la serrure 32 et du dispositif d'essuyage 34 en vue du montage du module 30 sur l'ouvrant 12 du véhicule.

Lors de la fixation du module 30 sur l'ouvrant 12, un élément de fixation commun 54 tel qu'une vis 88 est introduite de l'avant vers l'arrière dans les moyens de liaison 60. Conformément à la figure 4, la queue 90 de la vis est engagée dans un taraudage 92 correspondant de l'ouvrant 12. Le vissage de la vis 88 permet de serrer la tête 94 de la vis 88 sur l'épaulement annulaire 80 de façon à fixer les moyens de liaison 60 contre l'ouvrant 12.

L'élément de fixation commun 54 peut aussi être un goujon qui s'étend vers l'avant depuis l'ouvrant 12 de façon à traverser les moyens de liaison 60 et qui est associé à un écrou de fixation qui bloque axialement le module 30.

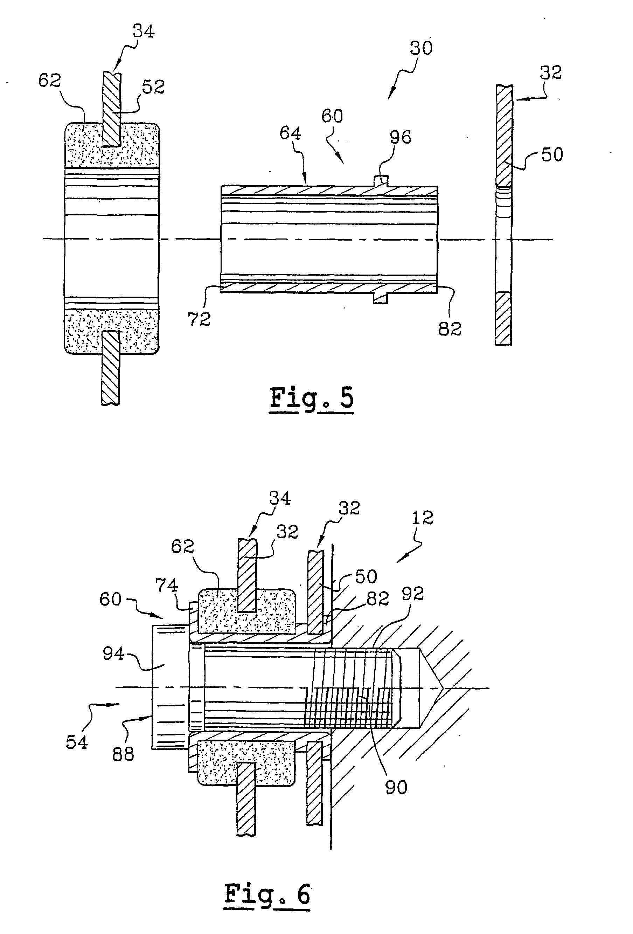

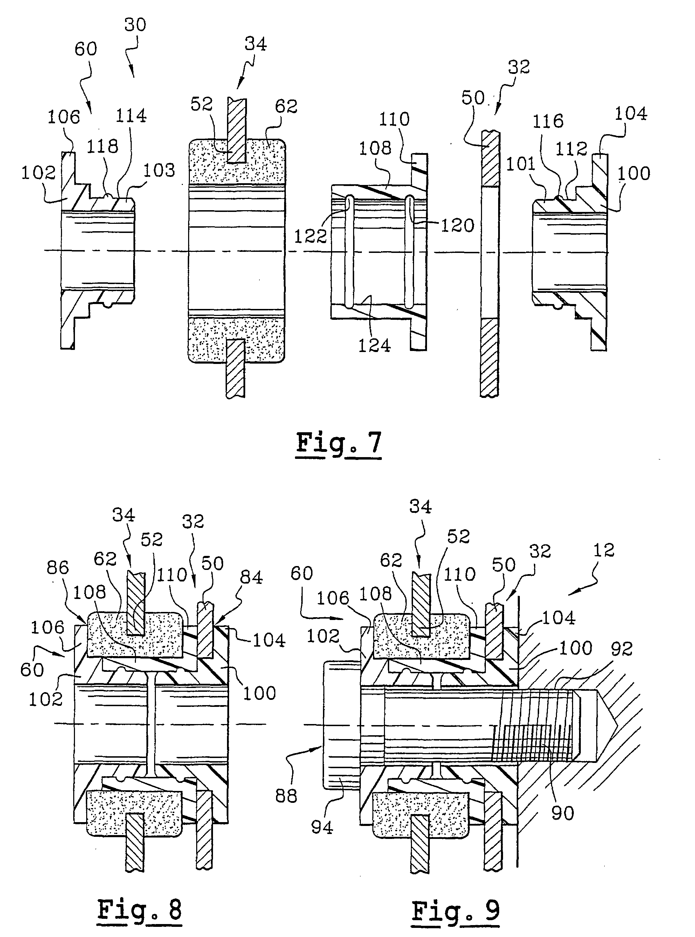

Selon une variante de réalisation représentée aux figures 5 et 6, l'entretoise 64 des moyens de liaison 60 comporte un tube dans la paroi cylindrique extérieure duquel est réalisée une nervure 96 d'orientation radiale qui permet de former une butée axiale vers l'arrière pour l'élément élastique 62 et une butée axiale vers l'avant pour la première zone de fixation 50 de la serrure 32.

L'assemblage du module 30 consiste alors à enfiler l'élément élastique 62 et la première zone de fixation 50 sur le tube de part et d'autre de la nervure d'arrêt 96, puis à déformer radialement, par exemple par sertissage, les extrémités libres avant 72 et arrière 82 de façon à immobiliser l'élément élastique 62 et la première zone de fixation 50 par rapport à l'entretoise 64.

Ensuite, le module d'équipement 30 est fixé sur l'ouvrant 12 par une vis 88 qui vient en appui sur la collerette avant 74, conformément à la figure 6.

Les figures 7 à 9, représentent un deuxième mode de réalisation des composants du module d'équipement 30.

L'entretoise 64 comporte ici un premier et un deuxième éléments tubulaires 100 et 102 qui présentent chacun une jupe cylindrique 101 et 103 à l'extrémité libre axiale opposée desquelles s'étendent une collerette radiale 104 et 106 qui sont chacune destinées à former une butée axiale de la première zone de fixation 50 et de l'élément élastique 62 respectivement.

Avantageusement, de façon à faciliter la réalisation des moyens de liaison 60, le premier et le deuxième éléments tubulaires 100 et 102 sont identiques. Ils peuvent être réalisés par exemple par moulage d'une matière plastique.

L'entretoise 64 comporte aussi un troisième élément annulaire intermédiaire 108 qui permet, lors de l'assemblage du module d'équipement 30, de former une butée axiale commune de la première zone de fixation 50 et de l'élément élastique 62 au moyen d'une collerette 110 qui s'étend radialement l'extérieur.

En effet, conformément à la figure 8, la première gorge radiale 84 qui reçoit la première zone de fixation 50 est délimitée axialement vers l'arrière par la collerette radiale 104 du premier élément tubulaire 100 et vers l'avant par la collerette radiale 110 du troisième élément intermédiaire 108. De façon similaire, la deuxième gorge 86 qui reçoit l'élément élastique 62 est délimitée axialement vers l'arrière par la collerette radiale 110 du troisième élément tubulaire intermédiaire 108 et vers l'avant par la collerette radiale 106 du deuxième élément tubulaire 102.

L'élément intermédiaire 108 permet aussi de maintenir axialement le premier et le deuxième éléments tubulaires 100 et 102 de façon à maintenir entre eux les éléments 100 et 102 de l'entretoise 64 après leur assemblage lors de la livraison du module 30, conformément à la figure 9.

Pour ce faire, les parois cylindriques externes 112 et 114 des jupes 101 et 102 comportent des nervures annulaires 116 et 118 respectivement qui coopèrent, lors de l'assemblage des trois éléments 100, 102, 108, avec des rainures 120 et 122 réalisées dans la paroi cylindrique interne 124 du troisième élément 108.

Lors de la fixation du module 30 sur l'ouvrant 12, une vis 88 est introduite de l'avant vers l'arrière dans les moyens de liaison 60. Conformément à la figure 9, la queue 90 de la vis est engagée dans un taraudage 92 correspondant de l'ouvrant 12. Le vissage de la vis 88 permet de serrer la tête 94 de la vis 88 sur la collerette 106 du deuxième élément 102 de façon à comprimer le premier élément 100 contre l'ouvrant 12 par l'intermédiaire du troisième élément 108.

## Revendications

1. Module d'équipement (30) de véhicule automobile du type qui comporte au moins un premier et un deuxième composants (32, 34) dont une première et une deuxième zones de fixation (50, 52), qui consistent notamment en des plaques dans lesquelles sont réalisées des orifices (56, 58), sont destinées à être fixées sur un élément (12) de structure du véhicule par l'intermédiaire d'un élément commun de fixation (54), et du type dont un élément élastique est interposé entre la deuxième zone de fixation et l'élément de structure (12),
**caractérisé en ce qu'**il comporte des moyens de liaison (60) qui relient la première et la deuxième zones de fixation (50, 52), de façon à relier entre eux les deux composants (32, 34) lors de la livraison du module (30) en vue de son montage sur l'élément de structure (12) du véhicule, **en ce qu'**un élément élastique (62) est intercalé axialement entre les moyens de liaison (60) et la deuxième zone de fixation (52) du deuxième composant (34), et **en ce que** les moyens de liaison (60) sont interposés entre l'élément commun de fixation (54), et l'élément de structure (12), lors de la fixation du module (30) de façon que le premier composant (32) soit immobilisé par rapport à l'élément de structure (12) et que le deuxième composant (34) soit découplé mécaniquement par rapport au premier composant (32), notamment en vue de filtrer les vibrations.

2. Module d'équipement (30) selon la revendication précédente, **caractérisé en ce que** les moyens de liaison (60) comportent une entretoise (64) dans laquelle sont formées au moins partiellement une première gorge (84) radiale externe qui immobilise axialement la première zone de fixation (50) du premier composant (32) et une deuxième gorge (86) radiale qui reçoit l'élément (62) élastique de découplage.

3. Module d'équipement (30) selon la revendication précédente, **caractérisé en ce que** l'entretoise (64) comporte un tube étagé qui est traversé axialement par l'élément (54) commun de fixation lors de la fixation du module (30), **en ce que** la première gorge (84) est réalisée par le sertissage de l'extrémité libre (82) du tronçon (68) de plus petit diamètre du tube sur la première zone de fixation (50), et **en ce que** la deuxième gorge (86) est réalisée par la première zone de fixation plane (50) du premier composant (32) qui s'étend radialement depuis la première gorge (84), et par une collerette (74) du tube qui s'étend radialement vers l'extérieur du tube depuis l'extrémité libre du tronçon (70) de plus grand diamètre.

4. Module d'équipement (30) selon la revendication 2, **caractérisé en ce que** l'entretoise (64) comporte un tube sur le diamètre extérieur duquel est réalisée une nervure (96) d'orientation radiale destinée à former une butée axiale vers l'arrière pour l'élément élastique (62) et une butée axiale vers l'avant pour la première zone de fixation (50) du premier composant (32), et **en ce que** les extrémités libres (72, 82) sont formées radialement de façon former la première et la deuxième gorge (84, 86) pour relier entre eux les deux composants (32, 34).

5. Module d'équipement (30) selon la revendication 2, **caractérisé en ce que** l'entretoise (64) comporte au moins deux éléments (100, 102, 108) formant chacun au moins partiellement la première et la deuxième gorges radiales (84, 86).

6. Module d'équipement (30) selon la revendication précédente, **caractérisé en ce que** l'entretoise (64) comporte un premier et un deuxième éléments (100, 102) qui présentent chacun à leurs extrémités libres axiales opposées une collerette radiale (104, 106) qui forment chacune une butée axiale de la première zone de fixation (50) et de l'élément élastique (62) dans des sens opposés respectivement, et **en ce qu'**un troisième élément (108), interposé axialement entre les deux premiers éléments (100, 102), présente une nervure radiale (110) qui forme butée axiale commune de l'élément élastique (62) et de la première zone de fixation (50).

7. Module d'équipement (30) selon la revendication précédente, **caractérisé en ce que** les parois (112, 114) cylindriques externes des deux premiers éléments (100, 102) comportent des formes radiales en saillies (116, 118) ou en creux qui coopèrent avec des formes en creux (120, 122) ou en saillies respectivement de la paroi (124) cylindrique interne du troisième élément (108) pour maintenir entre eux les éléments de l'entretoise (64) lors de la livraison du module (30).

8. Module d'équipement (30) selon l'une quelconque des revendications précédentes, **caractérisé en ce que** l'un au moins des composants est une serrure de verrouillage (32) de la position d'un panneau vitré (18) du véhicule.

9. Module d'équipement (30) selon l'une quelconque des revendications précédentes, **caractérisé en ce que** l'un au moins des composants est un dispositif d'essuyage (34) d'un panneau vitré (18) du véhicule.

10. Module d'équipement (30) selon l'une quelconque des revendications précédentes, **caractérisé en ce que** l'un au moins des composants est un feu de signalisation, tel qu'un feu de stop.

## Patentansprüche

1. Ausrüstungsmodul (30) eines Kraftfahrzeugs von der Art, die wenigstens eine erste und eine zweite Komponente (32, 34) umfasst, davon einen ersten und einen zweiten Befestigungsbereich (50, 52), die insbesondere aus Platten bestehen, in denen Öffnungen (56, 58) realisiert sind, durch ein gemeinsames Befestigungselement (54) zur Befestigung auf einem Strukturelement (12) des Fahrzeugs befestigt sind und von der Art, von der ein elastisches Element zwischen dem zweiten Befestigungsbereich und dem Strukturelement (2) zwischengeschoben ist,
**dadurch gekennzeichnet, dass** es Verbindungselemente (60) umfasst, die den ersten und den zweiten Befestigungsbereich (50, 52) derart untereinander verbinden, dass die beiden Komponenten (32, 34) bei der Lieferung des Moduls (30) zwecks seiner Montage auf dem Strukturelement (12) des Fahrzeugs untereinander verbunden werden, und dass ein elastisches Element (62) axial zwischen den Verbindungsmitteln (60) und dem zweiten Befestigungsbereich (52) der zweiten Komponente (34) zwischengeschaltet wird und dass die Verbindungsmittel (60) bei der Befestigung des Moduls (30) zwischen dem gemeinsamen Befestigungselement (54) und dem Strukturelement (12) zwischengeschoben sind, so dass die erste Komponente (32) im Verhältnis zum Strukturelement (12) blockiert wird und dass die zweite Komponente (34) im Verhältnis zur ersten Komponente (32) mechanisch abgekoppelt wird, insbesondere zur Filterung der Vibrationen.

2. Ausrüstungsmodul (30) gemäß dem vorherigen Anspruch, **dadurch gekennzeichnet, dass** die Verbindungsmittel (60) einen Verbindungssteg (64) umfassen, in dem wenigstens teilweise eine erste äußere radiale Auskehlung (84), die den ersten Befestigungsbereich (50) der ersten Komponente (32) axial blockiert, und eine zweite radiale Auskehlung (86) gebildet werden, die das elastische Abkopplungselement (62) aufnimmt.

3. Ausrüstungselement (30) gemäß dem vorherigen Anspruch, **dadurch gekennzeichnet, dass** der Verbindungssteg (64) eine gestufte Röhre umfasst, die bei der Befestigung des Moduls (30) axial durch das gemeinsame Befestigungselement (54) durchquert wird und dass die erste Auskehlung (84) durch das Festziehen des freien Endes (82) des Abschnitts (68) mit dem kleinsten Durchmesser der Röhre auf dem ersten Befestigungsbereich (50) realisiert wird und dass die zweite Auskehlung (86) durch den ersten planen Befestigungsbereich (50) der ersten Komponente (32) realisiert wird, der sich radial von der ersten Auskehlung (84) erstreckt, und durch eine Auskragung (74) der Röhre, die sich radial zur Außenseite der Röhre von dem freien Ende des Abschnitts (70) mit dem größeren Durchmesser erstreckt.

4. Ausrüstungsmodul (30) gemäß Anspruch 2, **dadurch gekennzeichnet, dass** der Verbindungssteg (64) eine Röhre auf dem Außendurchmesser umfasst, von dem eine zur Bildung eines axialen Anschlags nach hinten für das elastische Element (62) und eines axialen Anschlags nach vorn für den ersten Befestigungsbereich (50) der ersten Komponente. (32) bestimmte Rippung (96) radialer Ausrichtung realisiert wird und dass die freien Enden (72, 82) radial derart geformt sind, dass die erste und die zweite Auskehlung (84, 86) gebildet werden, um untereinander die beiden Komponenten (32, 34) zu verbinden.

5. Ausrüstungsmodul (30) gemäß Anspruch 2, **dadurch gekennzeichnet, dass** der Verbindungssteg (64) wenigstens zwei jeweils wenigstens teilweise die erste und die zweite radiale Auskehlung (84, 86) bildende Elemente (100, 102, 108) umfasst.

6. Ausrüstungsmodul (30) gemäß dem vorherigen Anspruch, **dadurch gekennzeichnet, dass** der Verbindungssteg (64) ein erstes und ein zweites Element (100, 102) umfasst, die jeweils an ihren freien axialen gegenüberliegenden Enden eine radiale Auskragung (104, 106) umfasst, die die jeweils einen axialen Anschlag des ersten Befestigungsbereichs (50) und des elastischen Elements (62) in der jeweils entgegen gesetzten Richtung bilden und dass ein axial zwischen den beiden ersten Elementen (100, 102) zwischengeschobenes drittes Element (108) eine radiale Rippung (110) aufweist, die einen gemeinsamen axialen Anschlag des elastischen Elements (62) und des ersten Befestigungsbereichs (50) aufweist.

7. Ausrüstungsmodul (30) gemäß dem vorherigen Anspruch, **dadurch gekennzeichnet, dass** die zylindrischen Außenwände (112, 114) der beiden ersten Elemente (100, 102) hohle oder radiale hervorspringende Formen (116, 118) umfassen, die jeweils mit den hohlen (120, 122) oder hervorspringenden Formen der zylindrischen Innenwand (124) des dritten Elements (108) zusammenwirken, um untereinander die Elemente des Verbindungsstegs (64) bei der Lieferung des Moduls (30) festzuhalten.

8. Ausrüstungsmodul (30) gemäß einem der vorherigen Ansprüche, **dadurch gekennzeichnet, dass** wenigstens eine der Komponenten ein Verriegelungsschloss (32) der Position einer Glasscheibe (18) des Fahrzeugs ist.

9. Ausrüstungsmodul (30) gemäß einem der vorherigen Ansprüche, **dadurch gekennzeichnet, dass** wenigstens eine der Komponenten eine Abwischvorrichtung (34) einer Glasscheibe (18) des Fahrzeugs ist.

10. Ausrüstungsmodul (30) gemäß einem der vorherigen Ansprüche, **dadurch gekennzeichnet, dass** wenigstens eine der Komponenten ein Signallicht, wie zum Beispiel ein Bremslicht ist.

## Claims

1. A motor vehicle equipment module (30) of the type which comprises at least a first and a second component (32, 34), of which a first and a second fixing area (50, 52), which consist in particular of plates in which orifices (56, 58) are implemented, are intended to be fixed on a structural element (12) of the vehicle by means of a common fixing element (54), and of the type of which an elastic element is interposed between the second fixing area and the structural element (12),
**characterised in that** it comprises connecting means (60) which connect the first and second fixing areas (50, 52), so as to connect the two components (32, 34) to one another during the delivery of the module (30) with a view to its mounting on the structural element (12) of the vehicle, **in that** an elastic element (62) is inserted axially between the connecting means (60) and the second fixing area (52) of the second component (34), and **in that** the connecting means (60) are interposed between the common fixing element (54) and the structural element (12) during the fixing of the module (30) so that the first component (32) is immobilised with respect to the structural element (12) and the second component (34) is mechanically decoupled with respect to the first component (32), in particular with a view to filtering the vibrations.

2. An equipment module (30) according to the preceding claim, **characterised in that** the connecting means (60) comprise a spacer (64) in which there are formed at least partially a first external radial groove (84) which axially immobilises the first fixing area (50) of the first component (32) and a second radial groove (86) which receives the elastic decoupling element (62).

3. An equipment module (30) according to the preceding claim, **characterised in that** the spacer (64) comprises a stepped tube through which the common fixing element (54) passes axially during the fixing of the module (30), **in that** the first groove (84) is implemented by the crimping of the free end (82) of the smaller diameter section (68) of the tube on the first fixing area (50), and **in that** the second groove (86) is implemented by the first flat fixing area (50) of the first component (32) which extends radially from the first groove (84), and by a flange (74) of the tube which extends radially towards the outside of the tube from the free end of the larger diameter section (70).

4. An equipment module (30) according to Claim 2, **characterised in that** the spacer (64) comprises a tube, on the external diameter of which there is implemented a rib (96) of radial orientation intended to form an axial limit stop towards the rear for the elastic element (62) and an axial limit stop towards the front for the first fixing area (50) of the first component (32), and **in that** the free ends (72, 82) are formed radially so as to form the first and second grooves (84, 86) in order to connect the two components (32, 34) to one another.

5. An equipment module (30) according to Claim 2, **characterised in that** the spacer (64) comprises at least two elements (100, 102, 108) each forming at least partially the first and second radial grooves (84, 86).

6. An equipment module (30) according to the preceding claim, **characterised in that** the spacer (64) comprises a first and a second element (100, 102) which each have at their opposite axial free ends a radial flange (104, 106) which each form an axial limit stop for the first fixing area (50) and the elastic element (62) in respectively opposite directions, and **in that** a third element (108), interposed axially between the first two elements (100, 102), has a radial rib (110) which forms a common axial limit stop for the elastic element (62) and the first fixing area (50).

7. An equipment module (30) according to the preceding claim, **characterised in that** the external cylindrical walls (112, 114) of the first two elements (100, 102) comprise projecting (116, 118) or hollow radial forms which cooperate with respectively hollow (120, 122) or projecting forms of the internal cylindrical wall (124) of the third element (108) in order to hold the elements of the spacer (64) to one another during delivery of the module (30).

8. An equipment module (30) according to any one of the preceding claims, **characterised in that** at least one of the components is a lock (32) for latching the position of a glazed panel (18) of the vehicle.

9. An equipment module (30) according to any one of the preceding claims, **characterised in that** at least one of the components is a device (34) for wiping a glazed panel (18) of the vehicle.

10. An equipment module (30) according to any one of the preceding claims, **characterised in that** at least one of the components is a signalling light, such as a stop light.
